# EUROPÄISCHE PATENTSCHRIFT

(11) **EP 1 495 650 B1**
(45) Veröffentlichungstag und Bekanntmachung des Hinweises auf die Patenterteilung: **26.08.2015**
(21) Anmeldenummer: 02747281.0
(22) Anmeldetag: 16.04.2002
(51) Int. Cl.: H04W 76/02

(54) **KATASTROPHEN UND HAVARIE-MODUS FÜR MOBILTELEFONE**
DISASTER AND EMERGENCY MODE FOR MOBILE RADIO PHONES
MODE CATASTROPHE OU ACCIDENT POUR TELEPHONES CELLULAIRES

(43) Veröffentlichungstag der Anmeldung: 12.01.2005
(73) Patentinhaber: QUALCOMM Incorporated, San Diego, CA 92121-1714 (US)
(72) Erfinder: NEUMANN, Peter, 81739 München (DE)
(74) Vertreter: Samson & Partner Patentanwälte mbB
(86) Internationale Anmeldenummer: PCT/EP2002/004214
(87) Internationale Veröffentlichungsnummer: WO 2003/088700

(56) Entgegenhaltungen:
- DE-A- 19 806 969
- US-A- 6 161 016

## Beschreibung

Die Erfindung betrifft Verfahren und Vorrichtungen zur Steuerung des Verbindungsaufbaus zu in einem von einem Katastrophenfall betroffenen Gebiet befindlichen Mobilstationen.

In einem Katastrophenfall ist erfahrungsgemäß häufig ein Mobilfunknetz im vom Katastrophenfall betroffenen Gebiet überlastet, da Nutzer vieler in diesem Gebiet befindlichen Mobilstationen versuchen, Notrufe abzusetzen.

Aus der WO 94/28687 A1 ist es bekannt, an alle Mobilstationen eines von einem Katastrophenfall getroffenen Gebietes per Broadcast (Gruppenruf) von einer Alarmzentrale aus simultan die gleiche Nachricht (beispielsweise betreffend den Katastrophenfall) zu übermitteln, wofür die Mobilstationen im betroffenen Gebiet dahingehend inaktiv geschaltet werden können, dass sie noch laufende Gespräche abbrechen und keine neuen Gespräche führen können.

Aufgabe der vorliegenden Erfindung ist es, möglichst effektiv unter Vermeidung einer Überlastung der in einem von einem Katastrophenfall betroffenen Gebiet vorhandenen Sprachverbindungskanäle geregelt Mobilstationen einen Verbindungsaufbau zu ermöglichen. Die Aufgabe wird jeweils durch die Gegenstände der unabhängigen Ansprüche gelöst.

Indem erfindungsgemäß über eine Rundspruchsendung (Cell Broadcast, beispielsweise SMS-CB in GSM etc.) an alle im betroffenen Gebiet befindlichen Mobilstationen mindestens einer Zelle eine Sequenz übermittelt wird, mittels welcher Sequenz eine Mobilstation einen Verbindungsaufbau (insbesondere einer Sprachverbindung) zu einer Zieladresse beantragen kann, ist unter Vermeidung einer Netzüberlastung eine Kontrolle des Verbindungsaufbaus zu den Mobilstationen im Gebiet möglich.

Die Cell Broadcast-Sendung kann zum Beispiel als Kurzmitteilung erfolgen. Alternativ oder zusätzlich ist auch eine ergonomische Information über Umstände des Katastrophenfalls an alle im Gebiet befindlichen Mobilstationen über eine Circuit-Switched-Group-Call-Funktion (leitungsbasierte Übermittlung von Sprachinformationen an alle Mobilstationen der Gruppe in mindestens einer Zelle) möglich.

Insbesondere ist eine Ansteuerung der Mobilstationen (Handies) durch Aktivierung von deren SIM-Application-Toolkit-Funktion (soweit in der SIM-Karte der Mobilstation vorhanden) möglich, um effizient die Mobilstationen dahingehend anzusteuern, dass diese beispielsweise selber keine Anrufe oder nur Anrufe zu vorgegebenen Nummer tätigen und/oder dass sie eine Mobilfunk-Endgerätenummer oder Mobilfunkteilnehmer-Identifikationskartennummer an eine Notrufzentrale (deren Adresse beispielsweise davor mit der Kennung übermittelt worden sein kann) mitteilen.

Nach einer Ausgestaltung der Erfindung wird Mobilstationen ermöglicht, während eines Katastrophenfalles als Ziel eine dafür vorgesehene Telefonnummer anzurufen, welche Telefonnummer beispielsweise aus der Sequenz und der Mobilstations-Gerätenummer gebildet sein kann, um so effizient eine Identifikation des einzelnen Mobilfunkendgerätes beim Anruf zu ermöglichen.

Um eine Erfassung aller Teilnehmer im Katastrophengebiet effizient durchzuführen, können die Mobilstationen veranlasst werden, ihre Mobilfunkendgerätenummer (IMEI) und/oder die Mobilfunkteilnehmer-Identifikationskartennummer (IMSI/MSISDN) der in der Mobilstation enthaltenen Mobilfunkteilnehmer-Identifikationskarte (SIM) repräsentierende Daten an eine vorgegebene Telefonnummer (z.B. durch SMS, CLIP etc.) zu übermitteln.

Weitere Merkmale und Vorteile der Erfindung ergeben sich aus den weiteren Ansprüchen und der nachfolgenden Beschreibung eines Ausführungsbeispiels anhand der Zeichnung. Dabei zeigt:

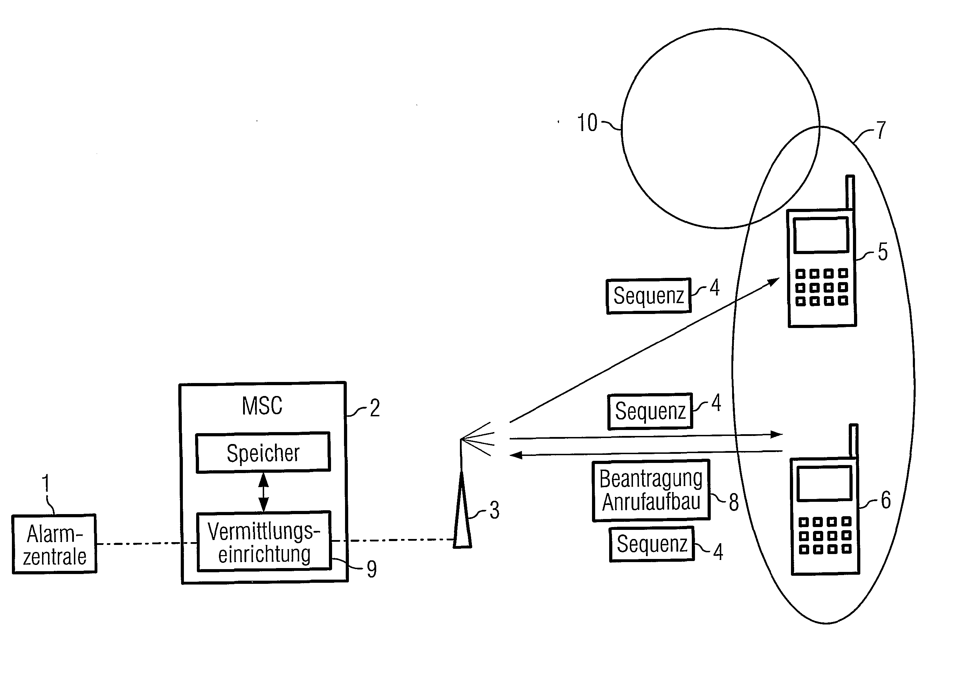

- Figur 1: schematisch die Steuerung des Verbindungsaufbaus von in einem von einem Katastrophenfall betroffenen Gebiet befindlichen Mobilstationen.

Figur 1 zeigt eine Alarmzentrale 1, welche in einem Katastrophenfall eine Vermittlungseinrichtung (MSC)2 veranlasst, über ein durch eine Basisstation 3 angedeutetes Mobilfunknetz eine Rundspruchsendung (Cell-Broadcast-Sendung per SMS etc.) an alle Mobilstationen 5, 6 in mindestens einer im vom Katastrophenfall betroffenen Gebiet 7, 8 befindlichen Mobilfunkzelle eines Mobilfunknetzes 3, 7, 8 zu übermitteln, welche Nachricht 4 die Mobilstationen 5, 6 veranlasst, künftig einen Verbindungsaufbau (den der Nutzer der Mobilstation wünscht oder der der Identifizierung aller im Gebiet 7, 8 befindlichen Mobilstationen dienen soll) unter Angabe der Sequenz (als SMS oder als Teil einer anzurufenden Telefonnummer) in einem Antrag (Request) zu beantragen (8).

Die Sequenz kann beispielsweise eine beliebige numerische Zahlen- oder Buchstabenfolge etc. sein. Bei der Übermittlung einer Sequenz 4 können überdies auch Angaben zum Katastrophenfall an Mobilfunkendgeräte 5, 6 als Text (SMS etc.) oder Sprachnachricht (voice message etc.) übermittelt werden.

Bei einer Beantragung 8 (durch eine Mobilstation 6) eines Anrufaufbaus über das Mobilfunknetz 3 bei einer Vermittlungseinrichtung (2, 9), welche Anrufaufbaubeantragung 8 die Sequenz (4) nicht enthält (und nicht nachträglich übermitteln kann), wird der Aufbau eines Anrufes durch die Vermittlungseinrichtung 2, 9 abgelehnt, um durch diese Kontrolle des Verbindungsaufbaus 8 eine Überlastung des Mobilfunknetzes im Katastrophenfall zu vermeiden. Bei einer Beantragung 8 eines Anrufaufbaus einer Mobilstation 6 über das Mobilfunknetz 3 bei einer Vermittlungseinrichtung (2, 9), welche Anrufaufbaubeantragung 8 die Sequenz (4) enthält (oder nachträglich übermitteln kann), wird der Aufbau eines Anrufes durch die Vermittlungseinrichtung 2, 9 durchgeführtzweckmäßig wird der Verbindungsaufbau aber nur durchgeführt, falls das angerufene Ziel (Telefonnummer etc) überdies ein (z. B. der Vermittlungseinrichtung bekanntes oder vorher von einer Notrufzentrale mitgeteiltes) Ziel ist.

Eine Mobilstation 6 versucht beispielsweise nach der Mitteilung der Sequenz 4 eine Verbindung (insbesondere Sprachverbindung) zu einem Ziel (wie z.B. einer Operator-Telefonnummer einer Alarmzentrale (1)) aufzubauen, indem sie dafür eine aus der (ihr vorher mitgeteilten) Sequenz 4, und evtl. aus Daten in ihrer MSISDN gebildete Telefonnummer anruft, wobei eine Vermittlungseinrichtung 9 in der MSC 2 feststellt, dass in dieser Telefonnummer die Sequenz 4 als Berechtigungsangabe (die zu einem Anruf berechtigt) übertragen wurde, worauf die Mobilstation 6 zu dem angerufenen Ziel (Operator etc) in der Alarmzentrale 1 durchgeschaltet wird.

Alternativ oder zusätzlich kann (beispielsweise über ein SIM-Application-Toolkit einer Mobilstation) mit der Übermittlung der Sequenz 4 die Mobilstationen 6 auch veranlasst werden, selbständig unter Übermittlung der Sequenz 4 (als Berechtigungsnachweis) eine Sprachverbindung aufzubauen oder eine Textmitteilung zu senden, welche eine Identifikation der Mobilstation 6 und/ oder der Sequenz 4 ermöglichende Daten übermittelt (beispielsweise die Mobilstations-Endgerätenummer IMEI, eine Mobilfunkteilnehmer-Identifikationskartennummer einer SIM in der Mobilstation 6 etc.).

Nach Ende des Katastrophenfalls können die Mobilstationen MS 5,6 und Vermittlungseinrichtungen MSC durch eine dafür vorgesehene Nachricht wieder in den Normalzustand versetzt werden, so dass die Mobilstationen wieder ohne Übermittlung einer Sequenz beliebige Ziele anrufen können und die Vermittlungseinrichtungen diese wieder ohne Prüfung einer Sequenz durchschalten können.

## Patentansprüche

1. Verfahren zur Kontrolle des Verbindungsaufbaus(8) zu in einem von einem Katastrophenfall betroffenen Gebiet (7, 10) befindlichen Mobilstationen (5, 6),
**dadurch gekennzeichnet,**
**dass** in einer an die Mobilstationen (5, 6) in mindestens einer im Gebiet (7, 10) befindlichen Zelle (7) eines Mobilfunknetzes (3, 7, 10) gerichteten Sendung eine Sequenz (4) gesendet wird,
wobei danach ein Verbindungsaufbau einer Verbindung einer Mobilstation (6) in diesem Gebiet (7, 10) zu einem von dieser (6) angerufenen (8) Ziel (1) nur erfolgt, falls die den Verbindungsaufbau (8, 1) beantragende Mobilstation (6) die Sequenz (4) mitteilt.

2. Verfahren nach Anspruch 1,
**dadurch gekennzeichnet,**
**dass** die Sendung der Sequenz (4) als Cell-Broadcast-Kurzmitteilung erfolgt.

3. Verfahren nach einem der vorhergehenden Ansprüche,
**dadurch gekennzeichnet,**
**dass** die Sendung der Sequenz (4) als Circuit-Switched-Group-Call erfolgt.

4. Verfahren nach einem der vorhergehenden Ansprüche,
**dadurch gekennzeichnet,**
**dass** durch die Sendung der Sequenz (4) über ein SIM-Application-Toolkit einer Mobilstation diese veranlasst wird, ihre Telefonnummer und/oder Endgerätnummer repräsentierende Daten an das Mobilfunknetz (2) oder ein Ziel (1) zu senden.

5. Verfahren nach einem der vorhergehenden Ansprüche,
**dadurch gekennzeichnet,**
**dass** die Telefonnummer eines Teilnehmers (1), die eine Mobilstation während des Katastrophenfalles anrufen kann, aus der Sequenz (4) und zumindest aus einem Teil der Mobilstations(6)-Gerätenummer (IMEI) und/oder Mobilstations-Teilnehmeridentifikationsnumer (IMSI/MSISDN) gebildet ist.

6. Verfahren nach einem der vorhergehenden Ansprüche,
**dadurch gekennzeichnet,**
**dass** die Telefonnummern und/oder Mobilstations-Gerätenummern von den Mobilstationen (5, 6) in dem Gebiet (7, 10) abgefragt werden, um möglichst vollständig festzustellen welche Mobilstationen sich im Gebiet (7, 10) befinden.

7. Vermittlungseinrichtung zur Durchführung des Verfahrens nach einem der vorhergehenden Ansprüche, die so ausgebildet ist, dass sie in einem Katastrophenfall nach Empfang zumindest einer Sequenz (4) bei Beantragung (8) eines Verbindungsaufbaus zu einem Ziel (1) durch eine Mobilstation (6) den Verbindungsaufbau zum Ziel nur ausführt, falls zumindest die Mobilstation die Sequenz angeben kann und das Ziel ein für den Rufaufbau vorgesehenes Ziel ist.

8. Mobilstation zur Durchführung des Verfahrens nach einem der vorhergehenden Verfahrensansprüche,
die so ausgebildet ist, dass sie in einem Katastrophenfall nach Empfang zumindest einer Sequenz (4) diese bei Beantragung (8) eines Verbindungsaufbaus zu einem Ziel (1) an das Mobilfunknetz (2) sendet.

## Claims

1. A method of controlling the connection setup (8) of mobile stations (5, 6) located in an area (7, 10) affected by a disaster
**characterized in that**
a sequence (4) is sent in a transmission directed to mobile stations (5, 6) in at least one cell (7) of a mobile radio network (3, 7, 10) located in the area (7, 10),
wherein a connection set-up of a connection from a mobile station (6) in this region (7, 10) to a destination (1) called by that mobile station is carried out only in the case the mobile station (6) requesting the connection set-up (8, 1) notifies the sequence (4).

2. A method according to claim 1,
**characterized in that**
the transmission of the sequence (4) is carried out as cell broadcast short message.

3. A method according to one of the preceding claims,
**characterized in that**
the transmission of the sequence (4) is carried out as a circuit-switched group call.

4. A method according to one of the preceding claims,
**characterized in that**
transmitting the sequence (4) via a SIM-Application-Toolkit of a mobile station effects that that mobile station sends data representing its telephone number and/or terminal number to the mobile radio network (2) or a destination (1).

5. A method according to one of the preceding claims,
**characterized in that**
the telephone number of a subscriber (1), which can be called by a mobile station during the event of a disaster, is formed of the sequence (4) and at least of a part of the mobile station terminal number (IMEI) and/or the mobile station subscriber identity number (IMSI/MSISDN).

6. A method according to one of the preceding claims,
**characterized in that**
the telephone numbers and/or mobile station identity numbers are requested by the mobile stations (5, 6) located in the area (7, 10) to determine which mobile stations are located in the area (7, 10) as completely as possible.

7. Switching device for carrying out the method according to one of the preceding claims, the switching device being adapted to carry out, upon reception of a sequence (4) the case of a request of a mobile station for a connection set-up to a destination (1), the connection set-up to the destination only in the case at least one mobile station (6) can provide the sequence (4) and the destination is a destination intended for the connection set-up.

8. Mobile station for carrying out the method according to one of the preceding method claims, the mobile station being adapted to transmit, in the case of an event of a disaster and after having received a sequence (4), the sequence (4) to the mobile radio network (2) when requesting a connection set-up to a destination (1).

## Revendications

1. Procédé de contrôle de l'établissement d'une liaison (8) avec des stations mobiles (5, 6) se trouvant dans une zone touchée par une catastrophe (7, 10),
**caractérisé en ce qu'**une séquence (4) est envoyée dans un envoi adressé aux stations mobiles (5, 6) dans au moins une cellule (7) d'un réseau de radiotéléphonie (3, 7, 10) se trouvant dans la zone (7, 10),
dans lequel une liaison entre une station mobile (6) se trouvant dans ladite zone (7, 10) et une destination (1) appelée (8) par celle-ci est ensuite établie uniquement si la station mobile (6) demandant l'établissement de la liaison (8, 1) communique la séquence (4).

2. Procédé selon la revendication 1,
**caractérisé en ce que** la séquence (4) est envoyée sous la forme d'un message court de diffusion cellulaire.

3. Procédé selon l'une des revendications précédentes,
**caractérisé en ce que** la séquence (4) est envoyée sous la forme d'un appel groupé par commutation de circuits.

4. Procédé selon l'une des revendications précédentes,
**caractérisé en ce que** l'envoi de la séquence (4), par l'intermédiaire d'une boîte à outils d'applications SIM d'une station mobile, a pour effet d'amener celle-ci à envoyer des données représentant son numéro de téléphone et/ou son numéro de terminal au réseau de radiotéléphonie (2) ou à une destination (1).

5. Procédé selon l'une des revendications précédentes,
**caractérisé en ce que** le numéro de téléphone d'un abonné (1) qui peut appeler une station mobile pendant le cas de catastrophe est formé de la séquence (4) et d'au moins une partie du numéro de terminal (IMEI) de la station mobile (6) et/ou du numéro d'identification de l'abonné de la station mobile (IMSI/MSISDN).

6. Procédé selon l'une des revendications précédentes,
**caractérisé en ce que** les numéros de téléphone et/ou les numéros de terminal de station mobile sont interrogés par les stations mobiles (5, 6) situées dans ladite zone (7, 10) pour déterminer de la façon la plus complète possible quelles stations mobiles se trouvent dans ladite zone (7, 10).

7. Dispositif de commutation pour la mise en oeuvre du procédé selon l'une des revendications précédentes, ledit dispositif étant agencé de manière à établir en cas de catastrophe, après réception d'au moins une séquence (4), une liaison avec une destination (1) lorsqu'une station mobile (6) demande (8) l'établissement d'une liaison avec une destination (1), uniquement si au moins la station mobile peut indiquer la séquence et que la destination soit une destination prévue pour l'établissement d'un appel.

8. Station mobile pour la mise en oeuvre du procédé selon l'une des revendications précédentes, ladite station étant agencée de manière à envoyer en cas de catastrophe, après réception d'au moins une séquence (4), celle-ci au réseau de radiotéléphonie (2) lors d'une demande (8) d'établissement d'une liaison avec une destination (1).
